# EUROPÄISCHE PATENTSCHRIFT

(11) **EP 3 707 393 B1**
(45) Veröffentlichungstag und Bekanntmachung des Hinweises auf die Patenterteilung: **20.10.2021**
(21) Anmeldenummer: 18804533.0
(22) Anmeldetag: 08.11.2018
(51) Int. Cl.: F16B 5/06, B60R 13/02, F16B 21/08

(54) **CLIPSYSTEM**
CLIP SYSTEM
SYSTÈME D'AGRAFAGE

(30) Priorität: 08.11.2017 DE 102017126157
(43) Veröffentlichungstag der Anmeldung: 16.09.2020
(73) Patentinhaber: LISI Automotive KKP GmbH & Co.KG, 97638 Mellrichstadt (DE); VOLKSWAGEN AKTIENGESELLSCHAFT, 38440 Wolfsburg (DE)
(72) Erfinder: BARTSCH, Mathias, 97618 Niederlauer (DE); REINMANN, Jürgen, 97657 Langenleiten (DE); WOLTER, Jan-Hendrik, 38518 Gifhorn (DE); SCHÖNEWALD, Heiko, 38165 Lehre (DE); RÜTTHARD, Niels, 38126 Braunschweig (DE)
(74) Vertreter: Habermann Intellectual Property Partnerschaft von Patentanwälten mbB
(86) Internationale Anmeldenummer: PCT/EP2018/080659
(87) Internationale Veröffentlichungsnummer: WO 2019/092129

(56) Entgegenhaltungen:
- DE-A1-102016 002 583
- DE-A1-102016 203 142
- DE-U1- 20 013 100

## Beschreibung

Die Erfindung betrifft ein Clipsystem zur Montage eines ersten Bauteils an einem zweiten Bauteil, wobei das Clipsystem ein Clipelement und ein Tüllenelement umfasst, wobei das Clipelement einen Kopfabschnitt aufweist, der an dem ersten Bauteil festgelegt werden kann, wobei das Clipelement einen Fußabschnitt aufweist, der an dem zweiten Bauteil festgelegt werden kann, indem der Fußabschnitt in ein Durchgangsloch des zweiten Bauteils so eingesteckt wird, dass der Fußabschnitt aus einer dem Kopfabschnitt des Clipelements abgewandten Seite des zweiten Bauteils hervorragt und die dem Kopfabschnitt abgewandte Seite des zweiten Bauteils mit einem dem Fußabschnitt zugehörigen Rastelement hintergreift, und wobei das Clipsystem ein auf das Clipelement aufsetzbares Tüllenelement aufweist, das dazu vorgesehen ist, zum Schutz des zweiten Bauteils einen direkten Kontakt des Rastelements mit dem zweiten Bauteil zu verhindern, wobei das Tüllenelement einen Hohlraum aufweist, der auf zwei einander gegenüberliegenden Seiten Öffnungen aufweist, sodass das Tüllenelement so auf den Fußabschnitt des Clipelements aufgesetzt werden kann, wobei der Fußabschnitt den Hohlraum durchläuft und aus einer dem Kopfabschnitt des Clipelements abgewandten Seite des Tüllenelements herausragt, und wobei der Fußabschnitt des Clipelements mindestens einen über einen Durchmesser des Fußabschnitts radial hervorspringenden Rückhalteabschnitt auf, wobei der Rückhalteabschnitt das Tüllenelement auf dem Clipelement hält, wenn das Tüllenelement zur Vormontage auf den Fußabschnitt des Clipelements aufgesetzt worden ist.

Aus dem Stand der Technik sind Clipsysteme bekannt, die es erlauben, ein erstes Bauteil an einem zweiten Bauteil festzulegen. Ein Kopfabschnitt eines Clipelements wird dabei an dem ersten Bauteil befestigt, während ein Fußabschnitt des Clipelements in ein Durchgangsloch des zweiten Bauteils eingesteckt wird, sodass der Fußabschnitt aus einer dem Kopfabschnitt abgewandten Seite des zweiten Bauteils herausragt. Dabei hintergreifen Rastelemente des Fußabschnitts die dem Kopfabschnitt abgewandte Seite des zweiten Bauteils. Somit wird das Clipelement an dem zweiten Bauteil festgelegt. Um das zweite Bauteil bei der Montage zu schützen, wird gemäß dem vorbekannten Stand der Technik vor der Montage in das zweite Bauteil ein Tüllenelement eingesteckt. Anschließend wird der Kopfabschnitt des Clipelements in das in dem Durchgangsloch befindliche Tüllenelement eingesteckt. Das Tüllenelement verhindert es, dass das Rastelement unmittelbar mit dem zweiten Bauteil in Verbindung tritt, wobei das zweite Bauteil beschädigt werden könnte. Dies ist insbesondere dann von Bedeutung, wenn es sich bei dem zweiten Bauteil um ein lackiertes Blechteil handelt, dessen Oberfläche durch das Rastelement zerkratzt werden könnte.

Bei der Montage des ersten Bauteils an dem zweiten Bauteil müssen zwei Montageschritte durchgeführt werden: Zunächst muss das Tüllenelement in das zweite Bauteil eingesteckt werden und anschließend muss das Clipelement in das in dem zweiten Bauteil angeordnete Tüllenelement eingesteckt werden.

Ein in DE 200 13 100 U1 beschriebenes Clipsystem weist ein Tüllenelement auf, welches an einem Fußabschnitt eines Clipelements vormontiert und festgelegt werden kann, sodass das Clipelement zusammen mit dem vormontierten Tüllenelement in eine Öffnung in dem zweiten Bauteil eingeführt werden können. Dabei kann das Clipelement eine in axialer Richtung über das vormontierte Tüllenelement vorspringende Zentrierspitze aufweisen. Das Tüllenelement ist mit einem nach innen umgestülpten Abschnitt an dem Fußabschnitt des Clipelements festgelegt. Die Vormontage des Tüllenelements an dem Clipelement sowie das Einführen und Festlegen des vormontierten Clipsystems in dem zweiten Bauteil ist aufwendig und erfordert trotz der Zentrierspitze eine hohe Sorgfalt, um eine unerwünschte Verformung oder Beschädigung des Tüllenelements während der Einführens durch die Öffnung in dem zweiten Bauteil zu vermeiden.

Der vorliegenden Erfindung liegt demgegenüber die Aufgabe zugrunde, ein Clipsystem bereitzustellen, das eine einfachere Montage ermöglicht.

Die Aufgabe wird gelöst durch Bereitstellung des eingangs beschriebenen Clipsystems, wobei das Clipsystem so ausgebildet ist, dass eine dem Kopfabschnitt des Clipelements abgewandte Seite des Tüllenelements nicht radial über den radial hervorspringenden Rückhalteabschnitt des Fußabschnitts hinausragt.

Hierdurch wird es ermöglicht, das Tüllenelement auf das Clipelement aufzusetzen, bevor eine Montage des Clipelements an dem zweiten Bauteil erfolgt.

Anders als bei einigen herkömmlichen Tüllenelementen kann der Fußabschnitt des Clipelements vorliegend so durch das Tüllenelement hindurchgeführt werden, dass der Fußabschnitt aus dem Tüllenelement herausragt. Das Clipelement kann somit in das Durchgangsloch eingesteckt werden, obwohl das Tüllenelement auf diesem aufsitzt. Bei der Montage treten sowohl der Fußabschnitt des Clipelements und das Tüllenelement durch das zweite Bauteil hindurch, wobei sich das Rastelement des Clipelements aufspreizt, sodass es das zweite Bauteil hintergreift. Das Clipelement ist bevorzugt aus einem Kunststoff hergestellt. Das Tüllenelement ist bevorzugt ebenfalls aus einem Kunststoff hergestellt und besonders bevorzugt plastisch und/oder elastisch verformbar, sodass das Rastelement das Tüllenelement beim Aufspreizen aufweiten kann. Vorzugsweise weist das Rastelement mehr als ein Rastelement auf. Besonders bevorzugt ist eine Ausführungsform mit zwei Rastelementen, die an dem Fußabschnitt des Clipelements auf einander gegenüberliegenden Seiten angeordnet sind.

Eine Vormontage des Tüllenelements auf dem Clipelement kann erfolgen, bevor das Clipelement an dem zweiten Bauteil festgelegt wird. Dies erlaubt eine vereinfachte Endmontage, da bei der Endmontage das erste Bauteil, an dem bereits das Clipelement mit dem darauf aufgesteckten Tüllenelement festgelegt wurde, mit dem zweiten Bauteil in einem einzigen Montageschritt verbunden werden kann. Die Vormontage des Clipelements an dem ersten Bauteil und die Vormontage des Tüllenelements auf dem Clipelement kann beispielsweise durch einen Zulieferer erfolgen, während die Endmontage durch einen Erstausrüster erfolgt, der das vormontierte erste Bauteil von dem Zulieferer erhält. Die Erfindung bietet darüber hinaus auch den Vorteil, dass beim Einstecken des Clipelements in das zweite Bauteil besonders große Haltekräfte zwischen dem Clipelement und dem zweiten Bauteil entstehen, da das Tüllenelement in dem Durchgangsloch des zweiten Bauteils verquetscht wird.

Der Fußabschnitt des Clipelements weist erfindungsgemäß mindestens einen über einen Durchmesser des Fußabschnitts radial hervorspringenden Rückhalteabschnitt auf, wobei der Rückhalteabschnitt das Tüllenelement auf dem Clipelement hält, wenn das Tüllenelement zur Vormontage auf den Fußabschnitt des Clipelements aufgesetzt worden ist. Es ist somit möglich, das Tüllenelement sicher auf das Clipelement aufsetzen, ohne dass sich das Tüllenelement von dem Clipelement löst. Erfindungsgemäß kann der Rückhalteabschnitt eine dem Kopfabschnitt des Clipelements zugewandte Rückhaltefläche aufweisen, die das Tüllenelement auf dem Clipelement hält, wenn das Tüllenelement zur Vormontage auf den Fußabschnitt des Clipelements aufgesetzt worden ist. Die Rückhaltefläche kann erfindungsgemäß durch einen beliebigen Bereich des Fußabschnitts gebildet werden.

Es kann erfindungsgemäß vorgesehen sein, dass das Tüllenelement hohlzylinderförmig ausgebildet ist. Bei einem hohlzylinderförmigen Tüllenelement handelt es sich um ein ring- beziehungsweise schlauchförmiges Element, das auf den Kopfabschnitt des Clipelements aufgesetzt werden kann. Es sind alternativ jedoch auch abweichende geometrische Ausgestaltungsformen des Tüllenelements möglich. So kann das Tüllenelement erfindungsgemäß hohlkegelstumpfförmig ausgebildet sein. Ein Hohlkegelstumpf weist eine konische Form auf, sodass das Tüllenelement das Clipelement beim Einsetzen in das Durchgangsloch führt.

Im Hinblick auf eine möglichst wirksame Abdichtung des Durchgangslochs in dem zweiten Bauteil ist gemäß einer besonders vorteilhaften Ausgestaltung des Erfindungsgedankens zufolge vorgesehen, dass der Flanschabschnitt mindestens einen in Umfangsrichtung umlaufenden Dichtungswulst oder eine in Umfangsrichtung umlaufende Dichtlippe aufweist. Der mindestens eine Dichtungswulst oder die mindestens eine Dichtlippe sind zweckmäßigerweise aus einem verformbaren und insbesondere aus einem elastisch verformbaren Material hergestellt. Es kann auch vorgesehen sein, dass zumindest der Flanschabschnitt des Tüllenelements, vorzugsweise jedoch das gesamte Tüllenelement aus einem verformbaren und insbesondere aus einem elastisch verformbaren Material hergestellt ist. Bei einem Anpressen des Flanschabschnitts des Tüllenelements an die zugeordnete Anschlagfläche in dem Kopfabschnitt des Clipelements wird ein Dichtungswulst oder eine Dichtlippe verformt und bewirkt eine in Umfangsrichtung um das Durchgangsloch des zweiten Bauteils umlaufende Abdichtung.

Es ist vorteilhaft, wenn ein Abstand der Öffnungen des Tüllenelements geringer ist als eine Länge des Fußabschnitts des Clipelements. Das Tüllenelement umschließt den Fußabschnitt somit nur teilweise, wenn es auf diesen aufgesetzt worden ist. Das Tüllenelement kann somit in unterschiedlichen Positionen auf dem Fußabschnitt aufsitzen. Es ist besonders vorteilhaft, wenn das Tüllenelement zunächst eine Vormontageposition auf dem Fußabschnitt des Clipelements einnehmen kann. Wenn sich das Tüllenelement in der Vormontageposition befindet, kann das Clipelement in das Durchgangsloch des zweiten Bauteils eingesetzt werden. Dabei wird das Tüllenelement über den Fußabschnitt des Clipelements in Richtung des Kopfabschnitts über das Rastelement geschoben. Dabei wird das Tüllenelement zwischen einer Innenwand des Durchgangslochs des zweiten Bauteils und dem Clipelement verquetscht. Wenn die Rastelemente des Clipelements aus dem Durchgangsloch auf der dem Kopfabschnitt abgewandten Seite hervortreten, verformen sie das ebenfalls aus dem Durchgangsloch hervortretende Tüllenelement, sodass die Rastelemente das zweite Bauteil hintergreifen. Dadurch verrastet das Clipelement mit dem zweiten Bauteil.

Vorzugsweise weist das Tüllenelement einen radial auskragenden Flanschabschnitt auf, der bei der Montage auf eine dem Kopfabschnitt des Clipelements zugewandte Seite des zweiten Bauteils aufsetzt. Durch den Flanschabschnitt wird eine maximale Eindringtiefe des Tüllenelements in das zweite Bauteil definiert. Der Flanschabschnitt kann erfindungsgemäß an einem Ende des Tüllenelements angeordnet sein. Das Tüllenelement wird bevorzugt so auf den Fußabschnitt aufgesetzt, dass der Flanschabschnitt des Tüllenelements dem Kopfabschnitt des Clipelements zugewandt ist.

Es kann erfindungsgemäß vorgesehen sein, dass der Fußabschnitt eine sich im Durchmesser verjüngende Suchspitze aufweist. Die sich verjüngende Suchspitze ermöglicht es, das Durchgangsloch des zweiten Bauteils bei der Blindmontage des ersten Bauteils an dem zweiten Bauteil auf einfache Weise aufzufinden, indem die Suchspitze über eine dem Clipelement zugewandte Oberfläche des zweiten Bauteils geführt wird. Die Suchspitze kann bei dem erfindungsgemäßen Clipsystem Verwendung finden, da die Suchspitze nach der Vormontage aus der dem Kopfabschnitt des Clipelements abgewandten Seite des Tüllenelements herausragt.

Bevorzugt wird die Suchspitze durch mindestens ein Stegelement gebildet, das parallel zu einer Längsachse des Clipelements ausgerichtet ist. Besonders bevorzugt sind mehrere Stegelement vorgesehen, die sich in einem Sternpunkt treffen. Alternativ kann die Suchspitze jedoch auch abweichend ausgeführt sein. So kann die Suchspitze erfindungsgemäß eine Halbkugelform, eine Kegelform oder eine sonstige Form aufweisen.

Es ist bevorzugt, wenn die Rückhaltefläche durch einen Abschnitt des Stegelements gebildet wird. Somit weist die Suchspitze eine Doppelfunktion auf: Zum einen erlaubt sie es, das Durchgangsloch einfacher aufzufinden, und zum anderen hält sie das Tüllenelement auf dem Fußabschnitt des Clipelements. Auch eine Suchspitze, die geometrisch abweichend ausgestaltet ist, sodass sie kein Stegelement aufweist, kann erfindungsgemäß mit einer dem Kopfabschnitt des Clipelements zugewandten Rückhaltefläche versehen werden. Es ist erfindungsgemäß außerdem möglich, dass die Suchspitze mehrere Rückhalteflächen bildet.

Gemäß einer besonderen Ausführungsform der Erfindung weist der Fußabschnitt des Clipelements einen Vormontagesitz auf, dessen Durchmesser einem Innendurchmesser des Tüllenelements entspricht, sodass das Tüllenelement in einer Vormontageposition auf dem Vormontagesitz aufsitzen kann. Der Vormontagesitz wird durch einen Bereich des Fußabschnitts gebildet, der vorzugsweise dem Kopfabschnitt des Clipelements entgegengesetzt angeordnet ist. Erst wenn das Clipelement in das Durchgangsloch des zweiten Bauteils eingesetzt wird, wird das Tüllenelement von dem Vormontagesitz heruntergeschoben, wobei es in Richtung des Kopfabschnitts des Clipelements verlagert wird und eine Montageposition annimmt.

Vorteilhafterweise ragt das Rastelement radial über einen maximalen Außendurchmesser des Vormontagesitzes heraus und liegt an dem Tüllenelement an, wenn sich das Tüllenelement in der Vormontageposition befindet, sodass das Tüllenelement in der Vormontageposition gehalten wird, wobei das Rastelement so ausgebildet ist, dass das Tüllenelement das Rastelement bei einer Verlagerung des Tüllenelements aus der Vormontageposition in Richtung des Kopfabschnitts radial nach innen drücken kann. Wenn der Kopfabschnitt in das Durchgangsloch des zweiten Bauteils eingeführt wird, werden Kräfte von dem zweiten Bauteil über das Tüllenelement auf das Rastelement übertragen, sodass das Rastelement in dem Durchgangsloch nach innen verschwenkt wird. Wenn das Rastelement aus dem Durchgangsloch austritt, kann sich das Rastelement wiederum so aufspreizen, sodass es das zweite Bauteil hintergreift.

Vorzugsweise weist das Rastelement einen Rastsperrabschnitt und einen Rasteingriffabschnitt auf, wobei der Rasteingriffabschnitt einen gegenüber dem Rastsperrabschnitt reduzierten Durchmesser aufweist, sodass der Rasteingriffabschnitt in das Durchgangsloch eingreift und der Rastsperrabschnitt die dem Kopfabschnitt des Clipelements abgewandte Seite des zweiten Bauteils hintergreift, wenn der Fußabschnitt des Clipelements bestimmungsgemäß in das Durchgangsloch des zweiten Bauteils eingesetzt ist. Der Rasteingriffabschnitt verhindert ein vollständiges Aufspreizen des Rastelements, da er in das Durchgangsloch in einer Montageposition eingreift. Dies ermöglicht es, das Clipelement wieder von dem zweiten Bauteil zu lösen, was bei vollständig aufgespreizten Rastelementen nur schwerlich möglich ist.

Bevorzugt weist der Kopfabschnitt des Clipelements einen Schaftabschnitt auf, der beidseitig von zwei über den Schaftabschnitt radial auskragenden Tellerabschnitten begrenzt wird. Der Kopfabschnitt kann somit von einer sogenannten Retaineraufnahmegeometrie des ersten Bauteils aufgenommen werden. Bei der Retaineraufnahmegeometrie kann es sich erfindungsgemäß um ein Klemmbügelelement mit radial abstehenden Klemmbügeln handeln, mit welchen das Halteelement klemmend und spielfrei in dem Kopfabschnitt des Clipelements festgelegt werden kann. Bei seiner Aufnahme wird der Schaftabschnitt durch das Halteelement umgriffen, wobei der Schaftabschnitt zusätzlich mit dem Halteelement verrasten kann. Die radial auskragenden Klemmbügel des Kopfabschnitts verhindern es, dass das Clipelement entlang einer Längsachse des Clipelements verlagert werden kann, wenn er in dieses eingesetzt ist.

Die Erfindung betrifft ferner ein Bauteilsystem mit einem ersten Bauteil, mit einem zweiten Bauteil, das ein Durchgangsloch aufweist, und mit einem Clipsystem nach einem der vorhergehenden Ansprüche, wobei zur Vormontage das Clipelement des Clipsystems mit dem Kopfabschnitt an dem ersten Bauteil festgelegt werden kann und das Tüllenelement auf den Fußabschnitt des Clipelements aufgesetzt werden kann, sodass anschließend eine Montage des ersten Bauteils an dem zweiten Bauteil erfolgen kann, indem das Clipelement in das Durchgangsloch so eingesteckt wird, dass das Rastelement des Fußabschnitts des Clipelements eine dem Kopfabschnitt abgewandte Seite des zweiten Bauteils hintergreift, wodurch das Clipelement an dem zweiten Bauteil rastend festgelegt wird. Das erste Bauteil weist bevorzugt ein bügelförmiges Halteelement auf.

Weitere vorteilhafte Ausgestaltungsformen der Erfindung werden in den Zeichnungen dargestellt. Dabei zeigt:
Fig. 1 eine schematische Darstellung des erfindungsgemäßen Clipsystems in einer perspektivischen Ansicht,
Fig. 2 eine schematische Darstellung eines Clipelements des erfindungsgemäßen Clipsystems in einer perspektivischen Ansicht,
Fig. 3 eine schematische Darstellung des Clipelements in einer Schnittansicht,
Fig. 4 eine schematische Darstellung eines Tüllenelements des erfindungsgemäßen Clipsystems in einer perspektivischen Ansicht,
Fig. 5 eine schematische Darstellung des Tüllenelements in einer Schnittansicht,
Fig. 6 eine schematische Darstellung eines erfindungsgemäßen Bauteilsystems mit dem Clipsystem in einer Schnittansicht,
Fig. 7 eine schematische Darstellung des erfindungsgemäßen Bauteilsystems in einer Seitenansicht,
Fig. 8 eine schematische Darstellung des erfindungsgemäßen Bauteilsystems in einer alternativen Seitenansicht,
Fig. 9 bis 11 schematische Darstellungen des erfindungsgemäßen Bauteilsystems bei verschiedenen Montageschritten jeweils in einer perspektivischen Ansicht,
Fig. 12 eine schematische Darstellung eines abweichend ausgestalteten Clipelements,
Fig. 13 eine schematische Darstellung einer perspektivischen Ansicht eines abweichend ausgestalteten Tüllenelements,
Fig. 14 eine schematische Darstellung einer Schnittansicht des in Fig. 13 abgebildeten Tüllenelements,
Fig. 15 eine schematische Darstellung eines abweichend ausgestalteten Clipsystems mit dem in Fig. 12 gezeigten Clipelement und mit dem in den Fig. 13 und 14 gezeigten Tüllenelement, und
Fig. 16 eine schematische Darstellung eines abweichend ausgestalteten Bauteilsystems mit dem in Fig. 15 gezeigten Clipsystem.

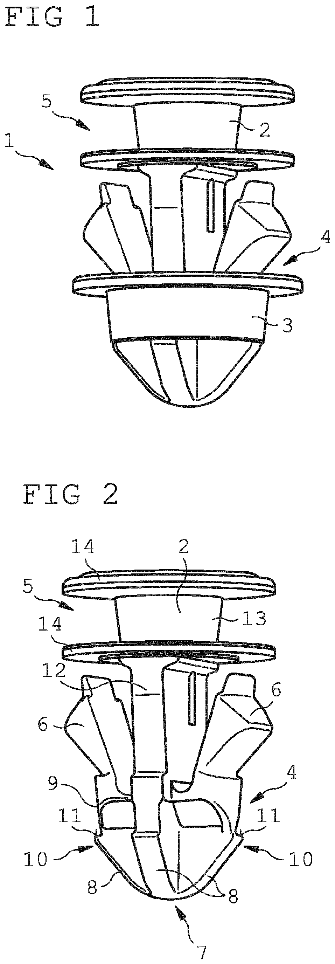

Fig. 1 zeigt eine schematische Darstellung des erfindungsgemäßen Clipsystems 1 in einer perspektivischen Ansicht. Das Clipsystem 1 weist ein Clipelement 2 und ein Tüllenelement 3 auf. Das Tüllenelement 3 ist auf einen Fußabschnitt 4 des Clipelements 2 aufgesteckt. Das Clipelement weist ferner einen Kopfabschnitt 5 auf, der an den Fußabschnitt 4 angrenzt.

Fig. 2 zeigt eine schematische Darstellung des Clipelements 2 des erfindungsgemäßen Clipsystems in einer perspektivischen Ansicht. Das Clipelement 2 ist aus einem Kunststoff ausgeführt. Der Fußabschnitt 4 des Clipelements 2 weist zwei Rastelemente 6 auf, die elastisch verformbar sind. Der Fußabschnitt 4 weist ferner eine Suchspitze 7 auf, die durch mehrere Stegelemente 8 gebildet wird. An die Suchspitze 7 grenzt ein Vormontagesitz 9 an, auf den das in Fig. 2 nicht dargestellte Tüllenelement 3 aufgesetzt werden kann. Die Suchspitze 7 weist auf einer dem Kopfabschnitt 5 zugewandten Seite Rückhalteabschnitte 10 auf. Die Rückhalteabschnitte 10 bilden Rückhalteflächen 11, die dem Vormontagesitz 9 zugewandt sind und es verhindern, dass sich das Tüllenelement 3 von dem Fußabschnitt 4 löst, wenn es auf dem Vormontagesitz 9 aufsitzt. Wenn das Tüllenelement 3 auf dem Vormontagesitz 9 aufsitzt, dann befindet es sich in einer Vormontageposition.

An den Vormontagesitz 9 grenzt ein Verbindungssteg 12 des Fußabschnitts 4 an, der den Vormontagesitz 9 mit dem Kopfabschnitt 5 des Clipelements 2 verbindet. Die Rastelemente 6 erstrecken sich aus dem Vormontagesitz 9 und verlaufen seitlich beabstandet von dem Verbindungssteg 12. In Fig. 2 befinden sich die Rastelemente 6 in einem aufgespreizten Zustand. Wenn der Fußabschnitt 4 in ein Durchgangsloch eines Bauteils eingesteckt wird, dann können die Rastelemente 6 radial nach innen gedrückt werden.

Der Kopfabschnitt 5 des Clipelements 2 weist einen Schaftabschnitt 13 auf. Der Schaftabschnitt 13 wird durch zwei radial auskragende Tellerabschnitte 14 begrenzt. Die Tellerabschnitte 14 sind an gegenüberliegenden Seiten des Kopfabschnitts 5 angeordnet. Der Kopfabschnitt 5 kann somit von einem bügelförmigen Halteelement (nicht dargestellt) aufgenommen werden. Dabei wird der Schaftabschnitt 13 durch das Halteelement umgriffen. Die Tellerabschnitte 14 des Kopfabschnitts 5 verhindern es, dass das Clipelement 2 entlang einer Längsachse des Clipelements 2 relativ zu dem bügelförmigen Halteelement bewegt werden kann, wenn der Kopfabschnitt 5 in dem Halteelement steckt.

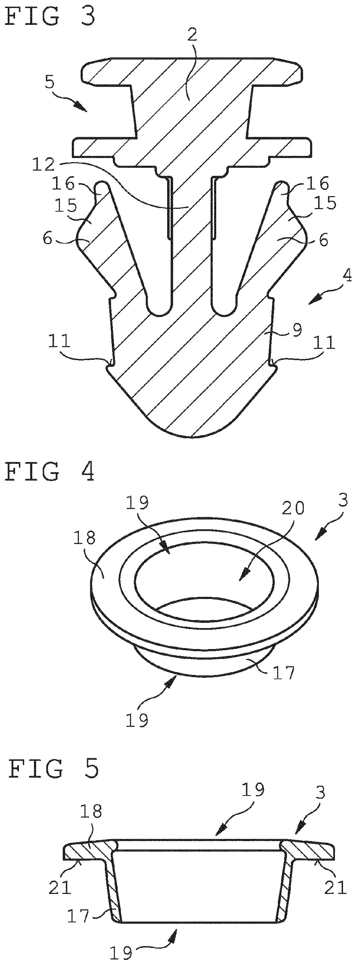

Fig. 3 zeigt eine schematische Darstellung des Clipelements 2 in einer Schnittansicht. Der Kopfabschnitt 5 und der Fußabschnitt 4 des Clipelements 2 sind dargestellt. In der Schnittansicht sind die Rückhalteflächen 11 des Fußabschnitts 4 sichtbar, die auf einer dem Kopfabschnitt 5 abgewandten Seite des Vormontagesitzes 9 angeordnet und dem Kopfabschnitt 5 zugewandt sind, sodass die Rückhalteflächen 11 Anschlagflächen für das an dem Vormontagesitz 9 angeordnete Tüllenelement 3 bilden.

Aus dem Vormontagesitz 9 erstrecken sich die Rastelemente 6 des Clipelements 2. Die Rastelemente 6 weisen jeweils einen Rastsperrabschnitt 15 und einen Rasteingriffabschnitt 16 auf. Der Rastsperrabschnitt 15 ist dazu geeignet, ein Durchgangsloch eines Bauteils zu hintergreifen. Der Rasteingriffabschnitt 16 weist einen gegenüber dem Rastsperrabschnitt 15 reduzierten Durchmesser auf und ist dazu geeignet, in ein Durchgangsloch einzugreifen, wenn das Clipelement 2 in einer Montageposition an einem Bauteil festgelegt ist. Dadurch wird ein ungewolltes Aufspreizen der Rastelemente 6 in radialer Richtung verhindert.

Fig. 4 zeigt eine schematische Darstellung des Tüllenelements 3 des erfindungsgemäßen Clipsystems 1 in einer perspektivischen Ansicht. Das Tüllenelement 3 weist einen Tüllenkörper 17 und einen radial auskragenden Flanschabschnitt 18 auf. Das Tüllenelement 3 weist ferner zwei einander gegenüberliegend angeordnete Öffnungen 19 zu einem sich in axialer Richtung erstreckenden und eine durchgehende Ausnehmung bildenden Hohlraum 20 auf, der zur Aufnahme des Fußabschnitts 4 des Clipelements 2 geeignet ist.

Fig. 5 zeigt eine schematische Darstellung des Tüllenelements 3 in einer Schnittansicht. Hier sind Auflageflächen 21 des Flanschabschnitts 18 dargestellt, mit denen das Tüllenelement 3 auf einem Bauteil aufliegen kann.

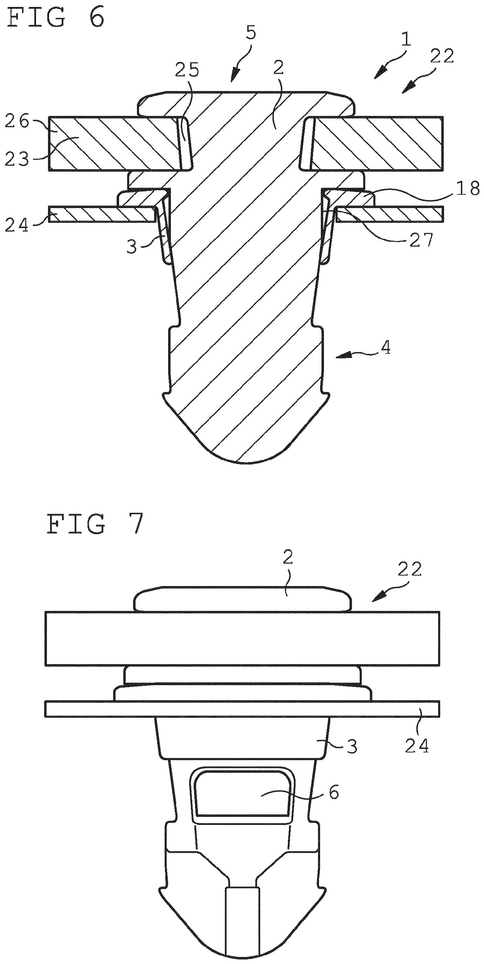

Fig. 6 zeigt eine schematische Darstellung eines erfindungsgemäßen Bauteilsystems 22 mit dem vorangehend beschriebenen Clipsystem 1 in einer Schnittansicht. Das Clipsystem 1 verbindet ein erstes Bauteil 23 mit einem plattenförmigen und mit einer durchgehenden Öffnung versehenen zweiten Bauteil 24. Sowohl das erste Bauteil 23 als auch das zweite Bauteil 24 sind nur abschnittsweise dargestellt. Der Kopfabschnitt 5 des Clipelements 2 befindet sich abschnittsweise in einer Aussparung 25 eines bügelförmigen Halteelements 26 des ersten Bauteils 23, wird von diesem formschlüssig umgriffen und ist an diesem festgelegt. Der Fußabschnitt 4 des Clipelements 2 und das Tüllenelement 3 des Clipsystems 1 befinden sich abschnittsweise in einem Durchgangsloch 27 des zweiten Bauteils 24. Der Flanschabschnitt 18 des Tüllenelements 3 liegt entlang eines Umfangsrands des Durchgangslochs 27 an dem zweiten Bauteil 24 an. Dadurch wird eine maximale Eindringtiefe des Tüllenelements 3 in das zweite Bauteil 24 definiert. Das Tüllenelement 3 befindet sich auf dem Clipelement 2 in einer Montageposition. Das Clipelement 2 ist an dem zweiten Bauteil 24 festgelegt, da die in der Schnittansicht in Fig. 6 nicht dargestellten Rastelemente des Clipelements 2 eine von dem Kopfabschnitt 5 des Clipelements 2 abgewandte Seite des zweiten Bauteils 24 rastend hintergreifen.

Fig. 7 zeigt eine schematische Darstellung des erfindungsgemäßen Bauteilsystems 22 in einer Seitenansicht. Das Clipelement 2 und das Tüllenelement 3 befinden sich in der auch in Fig. 6 gezeigten Montageposition. Dabei hintergreift das Rastelement 6 des Clipelements 2 das zweite Bauteil 24. Das Rastelement 6 befindet sich abschnittsweise innerhalb des Tüllenelements 3. Der in Fig. 7 nicht sichtbare Rasteingriffabschnitt 16 des Rastelements 6 ragt ferner in das Durchgangsloch 27 des zweiten Bauteils 24 ein, wodurch ein ungewolltes Aufspreizen des Rastelements 6 verhindert wird.

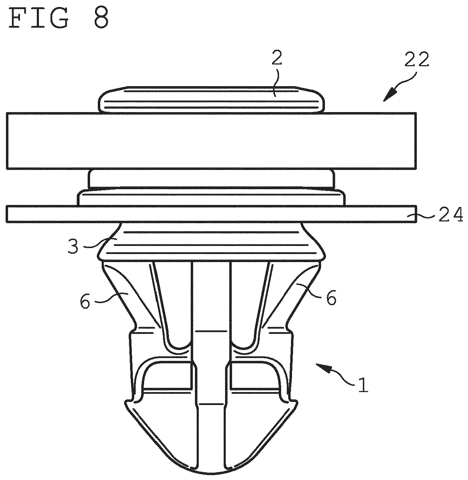

Fig. 8 zeigt eine schematische Darstellung des erfindungsgemäßen Bauteilsystems 22 in einer alternativen Seitenansicht. Hierbei wurde das Clipsystem 1 gegenüber der schematischen Darstellung gemäß Fig. 7 um 90° Grad um seine Längsachse gedreht. Das Clipelement 2 weist zwei einander gegenüberliegend angeordnete Rastelemente 6 auf, die in der Montageposition in das Tüllenelement 3 eingreifen. Das Tüllenelement 3 besteht aus einem plastisch verformbaren Material, sodass es in radialer Richtung durch die Rastelemente 6 aufgedehnt wird. Ein weiteres ungewolltes Aufspreizen der Rastelemente 6 wird dadurch verhindert, dass vorliegend nicht dargestellte Rasteingriffabschnitte der Rastelemente 6 in das Durchgangsloch 27 des zweiten Bauteils 24 hineinragen und eingreifen.

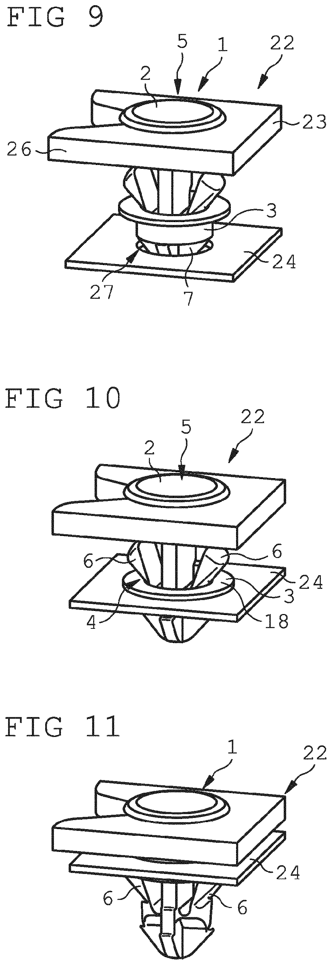

Fig. 9 zeigt eine schematische Darstellung des erfindungsgemäßen Bauteilsystems 22 in einem ersten Montageschritt in einer perspektivischen Ansicht. Dabei ist bereits das Tüllenelement 3 auf dem Clipelement 2 vormontiert. Das Clipelement 2 und das Tüllenelement 3 bilden gemeinsam das erfindungsgemäße Clipsystem 1. Das Clipelement 2 ist bereits an dem ersten Bauteil 23 festgelegt. Dazu wurde der Kopfabschnitt 5 des Clipelements 2 in das Halteelement 26 des ersten Bauteils 23 eingeschoben. Um das Clipelement 2 an dem zweiten Bauteil 24 festzulegen, wird das Clipelement 2 wie dargestellt mit der Suchspitze 7 des Clipelements 2 voran in das Durchgangsloch 27 des zweiten Bauteils 24 eingesteckt.

Fig. 10 zeigt eine schematische Darstellung des erfindungsgemäßen Bauteilsystems 22 in einem zweiten Montageschritt in einer perspektivischen Ansicht. Ein Flanschabschnitt 18 des Tüllenelements 3 liegt nun auf dem zweiten Bauteil 24 auf und verhindert, dass das Tüllenelement 3 noch weiter in das Durchgangsloch des zweiten Bauteils 24 eingeführt wird. Wenn das Clipelement 2 nun noch weiter in das Durchgangsloch eingeschoben wird, dann schiebt sich der Fußabschnitt 4 durch das Tüllenelement 3 hindurch, wobei das Tüllenelement 3 seine Vormontageposition verlässt und in Richtung des Kopfabschnitts 5 des Clipelements 2 bewegt wird. Die Rastelemente 6 des Clipelements 2 werden dabei radial nach innen gedrückt, sodass sie das Durchgangsloch des zweiten Bauteils 24 passieren können. Das Tüllenelement 3 schützt dabei das zweite Bauteil 24 vor Beschädigungen durch die Rastelemente 6.

Fig. 11 zeigt eine schematische Darstellung des erfindungsgemäßen Bauteilsystems 22 in einem dritten Montageschritt in einer perspektivischen Ansicht. Das Clipsystem 1 befindet sich in einer Montageposition und ist an dem zweiten Bauteil 24 festgelegt, da die Rastelemente 6 das zweite Bauteil 24 nun hintergreifen. Die Rastelemente 6 greifen dabei abschnittsweise in das Durchgangsloch ein, sodass ein zu weites Aufspreizen der Rastelemente 6 verhindert wird. Dies ermöglicht es, das Clipsystem 1 bei Bedarf wieder von dem zweiten Bauteil 24 zu lösen.

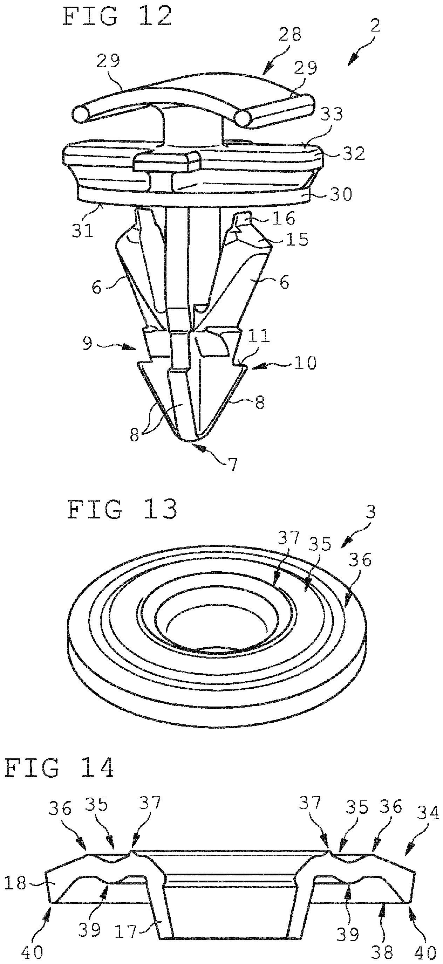

Fig. 12 zeigt eine perspektivische Ansicht eines abweichend ausgestalteten Clipelements 2. Anstelle der beiden radial vorspringenden Tellerabschnitte 14 weist das in den Fig. 12, 15 und 16 gezeigte Clipelement 2 ein von dem Fußabschnitt 4 abgewandt angeordnetes Klemmbügelelement 28 mit zwei radial vorspringenden Klemmbügeln 29 sowie einen dem Fußabschnitt 4 zugewandt angeordneten Anschlagflansch 30 auf. Der Anschlagflansch 30 weist im Vergleich zu dem entsprechenden Tellerelement 14 einen größeren Durchmesser und eine dadurch vergrößerte ringförmige Anschlagfläche 31 für den Flanschabschnitt 18 des Tüllenelements 3 auf. Zudem ist der Anschlagflansch 30 durch mehrere stegförmige Versteifungselemente 32 verstärkt, die gleichzeitig eine dem Klemmbügelelement 28 zugewandte Auflagefläche 33 für das erste Bauteil 23 bilden.

In den Fig. 13 und 14 sind eine perspektivische Ansicht und eine Schnittansicht eines abweichend zu dem vorausgehend beschriebenen Ausführungsbeispiel ausgestalteten Tüllenelements 3 gezeigt. Das Tüllenelement 3 ist aus einem plastisch verformbaren oder vorzugsweise elastischen Material hergestellt. Der Flanschabschnitt 18 des Tüllenelements 3 weist in radialer Richtung einen näherungsweise wellenförmigen Verlauf auf. An einer in axialer Richtung nach außen gerichteten Außenseite 34 des Flanschabschnitts 18 sind zwei in Umfangsrichtung umlaufend ausgebildete und nach außen vorspringende Dichtungswülste 35 und 36 ausgebildet. Der in radialer Richtung innere Dichtungswulst 35 weist zusätzlich eine in axialer Richtung vorspringende umlaufende Dichtlippe 37 auf. An einer der Außenseite 34 gegenüberliegenden Unterseite 38 weist der Flanschabschnitt 18 eine in Umfangsrichtung umlaufende Ausformung 39 und an einem radial äußeren Ende eine ebenfalls in Umfangsrichtung umlaufende Dichtlippe 40 auf.

Wenn das erfindungsgemäße Clipsystem 1 mit dem in den Fig. 13 und 14 gesondert dargestellten Tüllenelement 3 verwendet wird, um ein erstes Bauteil 23 mit einem zweiten Bauteil 24 zu verbinden, drückt das Klemmbügelelement 28 das erste Bauteil 23 an die Anlagefläche 33 der Versteifungselement 32 und legt das erste Bauteil 23 spielfrei an dem Kopfabschnitt 5 des Clipelements 2 fest. Das Tüllenelement 3 wird zusammen mit dem zweiten Bauteil 24 an die Anschlagfläche 31 des Anschlagflanschs 30 des Clipelements 2 gepresst. Dabei verformt sich das elastisch ausgebildete Tüllenelement 3, wobei die Dichtungswülste 35, 36 auf der dem Anschlagflansch 30 zugewandten Außenseite 34 des Flanschabschnitts 18 einen Spalt zwischen dem Anschlagflansch 30 des Clipelements 2 und dem Flanschabschnitt 18 des Tüllenelements 3 zuverlässig abdichtet. In gleicher Weise wird auch ein Spalt zwischen der Unterseite 38 des Flanschabschnitts 18 und dem zweiten Bauteil 24 zuverlässig abgedichtet. Auf diese Weise kann mit einfachen konstruktiven Mitteln eine zuverlässige und wasserdichte Abdichtung bei der Festlegung des zweiten Bauteils 24 an dem ersten Bauteil 23 erreicht werden.

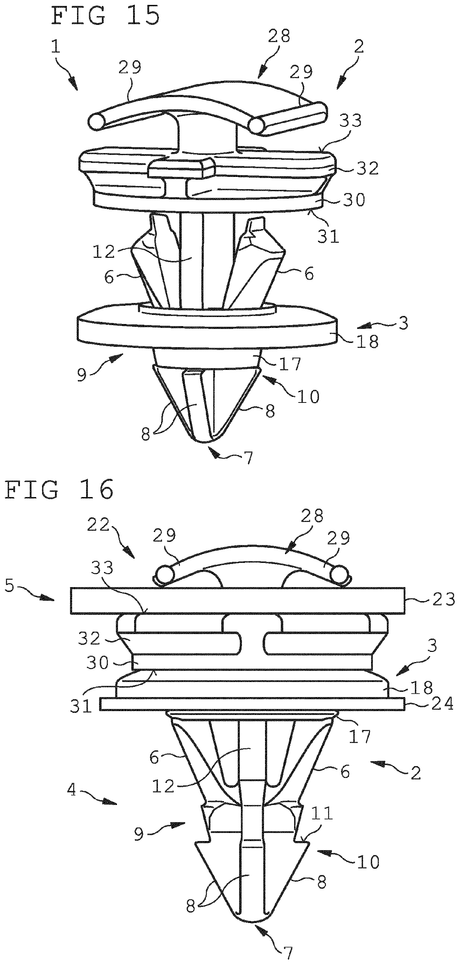

In Fig. 15 ist das abweichend ausgestaltete Clipsystem 1 mit dem in Fig. 12 dargestellten Clipelement 2 in Verbindung und dem in den Fig. 13 und 14 gezeigten Tüllenelement 3 gezeigt. Das Tüllenelement 3 ist in dem Vormontagesitz 9 an dem Fußabschnitt 4 des Clipelements 2 festgelegt.

In Fig. 16 ist das Bauteilsystem 22 mit dem in Fig. 15 gezeigten Clipsystem 1 dargestellt. Das erste Bauteil 23 wird von dem Klemmbügelelement 28 in dem Kopfabschnitt 5 klemmend festgelegt. Das zweite Bauteil 24 wird von den Rastelementen 6 zusammen mit dem Tüllenelement 3 an die Anschlagfläche 31 des Anschlagflansches 30 gepresst. Durch die Verwendung des erfindungsgemäß ausgestalteten Tüllenelements 3 wird eine wasserdichte Abdichtung der Befestigung des zweiten Bauteils 24 an dem ersten Bauteil 23 bewirkt.

### BEZUGSZEICHENLISTE

- 1.: Clipsystem
- 2.: Clipelement
- 3.: Tüllenelement
- 4.: Fußabschnitt
- 5.: Kopfabschnitt
- 6.: Rastelement
- 7.: Suchspitze
- 8.: Stegelement
- 9.: Vormontagesitz
- 10.: Rückhalteabschnitt
- 11.: Rückhaltefläche
- 12.: Verbindungssteg
- 13.: Schaftabschnitt
- 14.: Tellerabschnitt
- 15.: Rastsperrabschnitt
- 16.: Rasteingriffabschnitt
- 17.: Tüllenkörper
- 18.: Flanschabschnitt
- 19.: Öffnung
- 20.: Hohlraum
- 21.: Auflagefläche
- 22.: Bauteilsystem
- 23.: Erstes Bauteil
- 24.: Zweites Bauteil
- 25.: Aussparung
- 26.: Halteelement
- 27.: Durchgangsloch
- 28.: Klemmbügelelement
- 29.: Klemmbügel
- 30.: Anschlagflansch
- 31.: Anschlagfläche
- 32.: Versteifungselemente
- 33.: Auflagefläche
- 34.: Außenseite
- 35.: Dichtungswulst
- 36.: Dichtungswulst
- 37.: Dichtlippe
- 38.: Unterseite
- 39.: Ausformung
- 40.: Dichtlippe

## Patentansprüche

1. Clipsystem (1) zur Montage eines ersten Bauteils (23) an einem zweiten Bauteil (24), wobei das Clipsystem (1) ein Clipelement (2) und ein Tüllenelement (3) umfasst,
- wobei das Clipelement (2) einen Kopfabschnitt (5) aufweist, der an dem ersten Bauteil (23) festgelegt werden kann,
- wobei das Clipelement (2) einen Fußabschnitt (4) aufweist, der an dem zweiten Bauteil (24) festgelegt werden kann, indem der Fußabschnitt (4) in ein Durchgangsloch (27) des zweiten Bauteils (24) so eingesteckt wird, dass der Fußabschnitt (4) aus einer dem Kopfabschnitt (5) des Clipelements (2) abgewandten Seite des zweiten Bauteils (24) hervorragt und die dem Kopfabschnitt (5) abgewandte Seite des zweiten Bauteils (24) mit einem dem Fußabschnitt (4) zugehörigen Rastelement (6) hintergreift, und
- wobei das Clipsystem (1) ein auf das Clipelement (2) aufsetzbares Tüllenelement (3) aufweist, das dazu vorgesehen ist, zum Schutz des zweiten Bauteils (24) einen direkten Kontakt des Rastelements (6) mit dem zweiten Bauteil (24) zu verhindern,
- wobei das Tüllenelement (3)
einen Hohlraum (20) aufweist, der auf zwei einander gegenüberliegenden Seiten Öffnungen (19) aufweist, sodass das Tüllenelement (3) so auf den Fußabschnitt (4) des Clipelements (2) aufgesetzt werden kann, dass der Fußabschnitt (4) den Hohlraum (20) durchläuft und aus einer dem Kopfabschnitt (5) des Clipelements (2) abgewandten Seite des Tüllenelements (3) herausragt
- und wobei der Fußabschnitt (4) des Clipelements (2) mindestens einen über einen Durchmesser des Fußabschnitts (4) radial hervorspringenden Rückhalteabschnitt (10) aufweist, wobei der Rückhalteabschnitt (10) das Tüllenelement (3) auf dem Clipelement (2) hält, wenn das Tüllenelement (3) zur Vormontage auf den Fußabschnitt (4) des Clipelements (2) aufgesetzt worden ist,
**dadurch gekennzeichnet, dass** eine dem Kopfabschnitt (5) des Clipelements (2) abgewandte Seite des Tüllenelements (3) nicht radial über den radial hervorspringenden Rückhalteabschnitt (10) des Fußabschnitts (4) hinausragt.

2. Clipsystem (1) nach Anspruch 1, **dadurch gekennzeichnet, dass** der Rückhalteabschnitt (10) eine dem Kopfabschnitt (5) des Clipelements (2) zugewandte Rückhaltefläche (11) aufweist, die das Tüllenelement (3) auf dem Clipelement (2) hält, wenn das Tüllenelement (3) zur Vormontage auf den Fußabschnitt (4) des Clipelements (2) aufgesetzt worden ist.

3. Clipsystem (1) nach einem der vorhergehenden Ansprüche, **dadurch gekennzeichnet, dass** das Tüllenelement (3) hohlzylinderförmig oder hohlkegelstumpfförmig ausgebildet ist.

4. Clipsystem (1) nach einem der vorhergehenden Ansprüche, **dadurch gekennzeichnet, dass** ein Abstand der Öffnungen (19) des Tüllenelements (3) geringer ist als eine Länge des Fußabschnitts (4) des Clipelements (2).

5. Clipsystem (1) nach einem der vorhergehenden Ansprüche, **dadurch gekennzeichnet, dass** das Tüllenelement (3) einen radial auskragenden Flanschabschnitt (18) aufweist, der bei der Montage auf eine dem Kopfabschnitt (5) des Clipelements (2) zugewandte Seite des zweiten Bauteils (24) aufsetzt.

6. Clipsystem (1) nach Anspruch 5, **dadurch gekennzeichnet, dass** der Flanschabschnitt (18) mindestens einen in Umfangsrichtung umlaufenden Dichtungswulst (35, 36) oder eine in Umfangsrichtung umlaufende Dichtlippe (37, 40) aufweist.

7. Clipsystem (1) nach einem der vorhergehenden Ansprüche, **dadurch gekennzeichnet, dass** der Fußabschnitt (4) eine sich im Durchmesser verjüngende Suchspitze (7) aufweist.

8. Clipsystem (1) nach Anspruch 7, **dadurch gekennzeichnet, dass** die Suchspitze (7) durch mindestens ein Stegelement (8) gebildet wird, das parallel zu einer Längsachse des Clipelements (2) ausgerichtet ist.

9. Clipsystem (1) nach Anspruch 8 und Anspruch 2, **dadurch gekennzeichnet, dass** die Rückhaltefläche (11) durch einen Abschnitt des Stegelements (8) gebildet wird.

10. Clipsystem (1) nach einem der vorhergehenden Ansprüche, **dadurch gekennzeichnet, dass** der Fußabschnitt (4) des Clipelements (2) einen Vormontagesitz (9) aufweist, dessen Durchmesser einem Innendurchmesser des Tüllenelements (3) entspricht, sodass das Tüllenelement (3) in einer Vormontageposition auf dem Vormontagesitz (9) aufsitzen kann.

11. Clipsystem (1) nach Anspruch 10, **dadurch gekennzeichnet, dass** das Rastelement (6) radial über einen maximalen Außendurchmesser des Vormontagesitzes (9) herausragt und an dem Tüllenelement (3) anliegt, wenn sich das Tüllenelement (3) in der Vormontageposition befindet, sodass das Tüllenelement (3) in der Vormontageposition gehalten wird, wobei das Rastelement (6) so ausgebildet ist, dass das Tüllenelement (3) das Rastelement (6) bei einer Verlagerung des Tüllenelements (3) aus der Vormontageposition in Richtung des Kopfabschnitts (5) radial nach innen drücken kann.

12. Clipsystem (1) nach einem der vorhergehenden Ansprüche, **dadurch gekennzeichnet, dass** das Rastelement (6) einen Rastsperrabschnitt (15) und einen Rasteingriffabschnitt (16) aufweist, wobei der Rasteingriffabschnitt (16) einen gegenüber dem Rastsperrabschnitt (15) reduzierten Durchmesser aufweist, sodass der Rasteingriffabschnitt (16) in das in dem Durchgangsloch (27) angeordnete Tüllenelement (3) eingreift und der Rastsperrabschnitt (15) die dem Kopfabschnitt (5) des Clipelements (2) abgewandte Seite des zweiten Bauteils (24) hintergreift, wenn der Fußabschnitt (4) des Clipelements (2) bestimmungsgemäß in das Durchgangsloch (27) des zweiten Bauteils (24) eingesetzt ist.

13. Clipsystem (1) nach einem der vorhergehenden Ansprüche, **dadurch gekennzeichnet, dass** der Kopfabschnitt (5) des Clipelements (2) einen Schaftabschnitt (13) aufweist, der beidseitig von zwei über den Schaftabschnitt (13) radial auskragenden Tellerabschnitten (14) begrenzt wird.

14. Clipsystem (1) nach einem der vorhergehenden Ansprüche 1 bis 12, **dadurch gekennzeichnet, dass** der Kopfabschnitt (5) des Clipelements (2) ein Klemmbügelelement (28) mit mindestens einem radial abstehenden Klemmbügel (29) aufweist, mit welchem das erste Bauteil (23) in dem Kopfabschnitt (5) des Clipelements (2) klemmend festgelegt werden kann.

15. Bauteilsystem (22) mit einem ersten Bauteil (23), mit einem zweiten Bauteil (24), das ein Durchgangsloch (27) aufweist, und mit einem Clipsystem (1) nach einem der vorhergehenden Ansprüche, wobei zur Vormontage das Clipelement (2) des Clipsystems (1) mit dem Kopfabschnitt (5) an dem ersten Bauteil (23) festgelegt werden kann und das Tüllenelement (3) auf den Fußabschnitt (4) des Clipelements (2) aufgesetzt werden kann, sodass anschließend eine Montage des ersten Bauteils (23) an dem zweiten Bauteil (24) erfolgen kann, indem das Clipelement (2) in das Durchgangsloch (27) so eingesteckt wird, dass das Rastelement (6) des Fußabschnitts (4) des Clipelements (2) eine dem Kopfabschnitt (5) abgewandte Seite des zweiten Bauteils (24) hintergreift, wodurch das Clipelement (2) an dem zweiten Bauteil (24) rastend festgelegt wird.

## Claims

1. Clip system (1) for mounting a first component (23) on a second component (24), wherein the clip system (1) comprises a clip element (2) and a bushing element (3),
- wherein the clip element (2) comprises a head portion (5), which can be fixed to the first component (23),
- wherein the clip element (2) comprises a foot portion (4), which can be fixed to the second component (24) by the foot portion (4) being inserted into a through-hole (27) in the second component (24) such that the foot portion (4) projects from a side of the second component (24) facing away from the head portion (5) of the clip element (2) and engages behind the side of the second component (24) facing away from the head portion (5) by means of a latch element (6) associated with the foot portion (4), and
- wherein the clip system (1) comprises a bushing element (3) that can be attached to the clip element (2) and is provided to prevent direct contact of the latch element (6) with the second component (24) in order to protect the second component (24),
- wherein the bushing element (3) comprises a cavity (20), which comprises openings (19) on two sides opposite one another, such that the bushing element (3) can be attached to the foot portion (4) of the clip element (2) such that the foot portion (4) passes through the cavity (20) and projects from a side of the bushing element (3) facing away from the head portion (5) of the clip element (2)
- and wherein the foot portion (4) of the clip element (2) comprises at least one retaining portion (10) projecting radially over a diameter of the foot portion (4), wherein the retaining portion (10) retains the bushing element (3) on the clip element (2) when the bushing element (3) has been attached to the foot portion (4) of the clip element (2) for pre-assembly,
**characterised in that** a side of the bushing element (3) facing away from the head portion (5) of the clip element (2) does not project radially beyond the radially projecting retaining portion (10) of the foot portion (4).

2. Clip system (1) according to claim 1, **characterised in that** the retaining portion (10) comprises a retaining surface (11) facing the head portion (5) of the clip element (2), which surface retains the bushing element (3) on the clip element (2) when the bushing element (3) has been attached to the foot portion (4) of the clip element (2) for pre-assembly.

3. Clip system (1) according to any of the preceding claims, **characterised in that** the bushing element (3) is in the shape of a hollow cylinder or a hollow truncated cone.

4. Clip system (1) according to any of the preceding claims, **characterised in that** a distance between the openings (19) in the bushing element (3) is less than a length of the foot portion (4) of the clip element (2).

5. Clip system (1) according to any of the preceding claims, **characterised in that** the bushing element (3) comprises a radially projecting flange portion (18), which attaches to a side of the second component (24) facing the head portion (5) of the clip element (2) during assembly.

6. Clip system (1) according to claim 5, **characterised in that** the flange portion (18) comprises at least one sealing bead (35, 36) extending in the circumferential direction or a sealing lip (37, 40) extending in the circumferential direction.

7. Clip system (1) according to any of the preceding claims, **characterised in that** the foot portion (4) comprises a locating tip (7) that tapers in diameter.

8. Clip system (1) according to claim 7, **characterised in that** the locating tip (7) is formed by at least one web element (8), which is oriented in parallel with a longitudinal axis of the clip element (2).

9. Clip system (1) according to claim 8 and claim 2, **characterised in that** the retaining surface (11) is formed by a portion of the web element (8).

10. Clip system (1) according to any of the preceding claims, **characterised in that** the foot portion (4) of the clip element (2) comprises a pre-assembly seat (9), the diameter of which corresponds to an internal diameter of the bushing element (3), such that the bushing element (3) can rest on the pre-assembly seat (9) in a pre-assembly position.

11. Clip system (1) according to claim 10, **characterised in that** the latch element (6) projects radially beyond a maximum external diameter of the pre-assembly seat (9) and abuts the bushing element (3) when the bushing element (3) is in the pre-assembly position, such that the bushing element (3) is retained in the pre-assembly position, wherein the latch element (6) is formed such that the bushing element (3) can push the latch element (6) radially inwards towards the head portion (5) when the bushing element (3) is displaced out of the pre-assembly position.

12. Clip system (1) according to any of the preceding claims, **characterised in that** the latch element (6) comprises a latch-blocking portion (15) and a latch-engagement portion (16), wherein the latch-engagement portion (16) has a diameter that is reduced compared with the latch-blocking portion (15) such that the latch-engagement portion (16) engages in the bushing element (3) arranged in the through-hole (27) and the latch-blocking portion (15) engages behind the side of the second component (24) facing away from the head portion (5) of the clip element (2) when the foot portion (4) of the clip element (2) has been inserted into the through-hole (27) in the second component (24) as intended.

13. Clip system (1) according to any of the preceding claims, **characterised in that** the head portion (5) of the clip element (2) comprises a shaft portion (13), which is delimited on either side by two plate portions (14) projecting radially beyond the shaft portion (13).

14. Cable bushing (1) according to any of claims 1 to 12, **characterised in that** the head portion (5) of the clip element (2) comprises a clamp element (28) comprising at least one radially protruding clamp (29), by means of which the first component (23) can be fixed in the head portion (5) of the clip element (2) in a clamping manner.

15. Component system (22) comprising a first component (23), a second component (24), which comprises a through-hole (27), and a clip system (1) according to any of the preceding claims, wherein, for the pre-assembly, the clip element (2) of the clip system (1) can be fixed to the first component (23) by the head portion (5) and the bushing element (3) can be attached to the foot portion (4) of the clip element (2) such that the first component (23) can then be mounted on the second component (24) by the clip element (2) being inserted into the through-hole (27) such that the latch element (6) of the foot portion (4) of the clip element (2) engages behind a side of the second component (24) facing away from the head portion (5), whereby the clip element (2) is fixed to the second component (24) in a latching manner.

## Revendications

1. Système de clip (1) pour monter un premier composant (23) sur un deuxième composant (24), dans lequel le système de clip (1) comprend un élément formant clip (2) et un élément formant manchon (3),
- dans lequel l'élément formant clip (2) présente une section de tête (5), qui peut être fixée sur le premier composant (23),
- dans lequel l'élément formant clip (2) présente une section de pied (4), qui peut être fixée sur le deuxième composant (24) en ce que la section de pied (4) est enfichée dans un trou de passage (27) du deuxième composant (24) de telle sorte que la section de pied (4) dépasse d'un côté, opposé à la section de tête (5) de l'élément formant clip (2), du deuxième composant (24) et vient en prise avec le côté, opposé à la section de tête (5), du deuxième composant (24) avec un élément d'enclenchement (6) faisant partie de la section de pied (4), et
- dans lequel le système de clip (1) présente un élément formant manchon (3) pouvant être posé sur l'élément formant clip (2), qui est prévu pour empêcher un contact direct de l'élément d'enclenchement (6) avec le deuxième composant (24) pour protéger le deuxième composant (24),
- dans lequel l'élément formant manchon (3) présente une cavité (20), qui présente, sur deux côtés se faisant face l'un l'autre, des ouvertures (19) de telle sorte que l'élément formant manchon (3) peut être posé de telle sorte sur la section de pied (4) de l'élément formant clip (2) que la section de pied (4) traverse la cavité (20) et dépasse d'un côté, opposé à la section de tête (5) de l'élément formant clip (2), de l'élément formant manchon (3),
- et dans lequel la section de pied (4) de l'élément formant clip (2) présente au moins une section de retenue (10) faisant saillie radialement au-delà d'un diamètre de la section de pied (4), dans lequel la section de retenue (10) maintient l'élément formant manchon (3) sur l'élément formant clip (2) quand l'élément formant manchon (3) a été placé pour le prémontage sur la section de pied (4) de l'élément formant clip (2),
**caractérisé en ce qu'**un côté, opposé à la section de tête (5) de l'élément formant clip (2), de l'élément formant manchon (3) ne dépasse pas radialement au-delà de la section de retenue (10) faisant saillie radialement, de la section de pied (4).

2. Système de clip (1) selon la revendication 1, **caractérisé en ce que** la section de retenue (10) présente une surface de retenue (11) tournée vers la section de tête (5) de l'élément formant clip (2), qui maintient l'élément formant manchon (3) sur l'élément formant clip (2) quand l'élément formant manchon (3) a été placé pour le prémontage sur la section de pied (4) de l'élément formant clip (2).

3. Système de clip (1) selon l'une quelconque des revendications précédentes, **caractérisé en ce que** l'élément formant manchon (3) est réalisé en forme de cylindre creux ou en forme de cône creux tronqué.

4. Système de clip (1) selon l'une quelconque des revendications précédentes, **caractérisé en ce qu'**une distance des ouvertures (19) de l'élément formant manchon (3) est inférieure à une longueur de la section de pied (4) de l'élément formant clip (2).

5. Système de clip (1) selon l'une quelconque des revendications précédentes, **caractérisé en ce que** l'élément formant manchon (3) présente une section de bride (18) en porte-à-faux radialement, qui est placée lors du montage sur un côté, tourné vers la section de tête (5) de l'élément formant clip (2), du deuxième composant (24).

6. Système de clip (1) selon la revendication 5, **caractérisé en ce que** la section de bride (18) présente au moins un renflement d'étanchéité (35, 36) s'étendant en périphérie dans une direction périphérique ou une lèvre d'étanchéité (37, 40) s'étendant en périphérie dans une direction périphérique.

7. Système de clip (1) selon l'une quelconque des revendications précédentes, **caractérisé en ce que** la section de pied (4) présente une pointe de recherche (7) se rétrécissant en diamètre.

8. Système de clip (1) selon la revendication 7, **caractérisé en ce que** la pointe de recherche (7) est formée par au moins un élément formant entretoise (8), qui est orienté de manière parallèle par rapport à un axe longitudinal de l'élément formant clip (2).

9. Système de clip (1) selon la revendication 8 et la revendication 2, **caractérisé en ce que** la surface de retenue (11) est formée par une section de l'élément d'entretoise (8).

10. Système de clip (1) selon l'une quelconque des revendications précédentes, **caractérisé en ce que** la section de pied (4) de l'élément formant clip (2) présente un siège de prémontage (9), dont le diamètre correspond à un diamètre intérieur de l'élément formant manchon (3) de sorte que l'élément formant manchon (3) peut siéger dans une position de prémontage sur le siège de prémontage (9).

11. Système de clip (1) selon la revendication 10, **caractérisé en ce que** l'élément d'enclenchement (6) dépasse radialement au-delà d'un diamètre extérieur maximal du siège de prémontage (9) et repose sur l'élément formant manchon (3) quand l'élément formant manchon (3) se trouve dans la position de prémontage de sorte que l'élément formant manchon (3) est maintenu dans la position de prémontage, dans lequel l'élément d'enclenchement (6) est réalisé de telle sorte que l'élément formant manchon (3) peut pousser radialement vers l'intérieur l'élément d'enclenchement (6) lors d'un déplacement de l'élément formant manchon (3) hors de la position de prémontage en direction de la section de tête (5).

12. Système de clip (1) selon l'une quelconque des revendications précédentes, **caractérisé en ce que** l'élément d'enclenchement (6) présente une section de blocage par enclenchement (15) et une section de prise par enclenchement (16), dans lequel la section de prise par enclenchement (16) présente un diamètre réduit par rapport à la section de blocage par enclenchement (15) de sorte que la section de prise par enclenchement (16) vient en prise avec l'élément formant manchon (3) disposé dans le trou de passage (27) et la section de blocage par enclenchement (15) vient en prise par l'arrière avec le côté, opposé à la section de tête (5) de l'élément formant clip (2), du deuxième composant (24) quand la section de pied (4) de l'élément formant clip (2) est insérée selon l'usage prévu dans le trou de passage (27) du deuxième composant (24).

13. Système de clip (1) selon l'une quelconque des revendications précédentes, **caractérisé en ce que** la section de tête (5) de l'élément formant clip (2) présente une section de tige (13), qui est délimitée des deux côtés par deux sections de rondelle (14) en porte-à-faux radialement au-delà de la section de tige (13).

14. Système de clip (1) selon l'une quelconque des revendications précédentes 1 à 12, **caractérisé en ce que** la section de tête (5) de l'élément formant clip (2) présente un élément à arceau de serrage (28) avec au moins un arceau de serrage (29) faisant saillie radialement, avec lequel le premier composant (23) peut être fixé par serrage dans la section de tête (5) de l'élément formant clip (2).

15. Système à composants (22) avec un premier composant (23), avec un deuxième composant (24), qui présente un trou de passage (27), et avec un système de clip (1) selon l'une quelconque des revendications précédentes, dans lequel l'élément formant clip (2) du système de clip (1) peut être fixé avec la section de tête (5) sur le premier composant (23) aux fins du prémontage et l'élément formant manchon (3) peut être placé sur la section de pied (4) de l'élément formant clip (2) si bien qu'ensuite un montage du premier composant (23) sur le deuxième composant (24) peut avoir lieu en ce que l'élément formant clip (2) est enfiché dans le trou de passage (27) de telle sorte que l'élément d'enclenchement (6) de la section de pied (4) de l'élément formant clip (2) vient en prise par l'arrière avec un côté, opposé à la section de tête (5), du deuxième composant (24) ce qui permet de fixer par enclenchement l'élément formant clip (2) sur le deuxième composant (24).
